**Europäisches Patentamt**

**European Patent Office**

**Office européen des brevets**

(19)

(11) Veröffentlichungsnummer : **0 071 263**
**B1**

(12)     EUROPÄISCHE PATENTSCHRIFT

(45) Veröffentlichungstag der Patentschrift :
**21.11.85**

(51) Int. Cl.⁴ : **H 04 Q   3/54**

(21) Anmeldenummer : **82106840.0**

(22) Anmeldetag : **28.07.82**

(54) **Verfahren zum Austausch von Informationen unterschiedlicher Art zwischen einer Fernmeldeanlage, insbesondere Fernsprechanlage, und einem peripheren Gerät.**

(30) Priorität : **30.07.81 DE 3130210**

(43) Veröffentlichungstag der Anmeldung :
**09.02.83 Patentblatt 83/06**

(45) Bekanntmachung des Hinweises auf die Patenterteilung : **21.11.85 Patentblatt 85/47**

(84) Benannte Vertragsstaaten :
**AT BE FR GB IT SE**

(56) Entgegenhaltungen :
**DE-B- 2 906 717**
**US-A- 4 078 158**
**ELECTRICAL COMMUNICATION, Band 53, no.4, 1978, New York (US) V. CARRUET et al.: "Man-machine software design in modern SPC switching systems" Seiten 265-272**

(73) Patentinhaber : **Siemens Aktiengesellschaft**
**Berlin und München Wittelsbacherplatz 2**
**D-8000 München 2 (DE)**

(72) Erfinder : **Vandenberghe, Jim**
**Brovwerystraat 51**
**B-9800 Aalter (BE)**

**Beschreibung**

Die Erfindung bezieht sich auf ein Verfahren zum Austausch von zu verschiedenen Informationsblöcken nach einem bestimmten System zusammengefaßten Informationen unterschiedlicher Art zwischen zumindest einem an einer Fernmelde-, insbesondere Fernsprechanlage, über einen einzigen Anschluß anschaltbaren, peripheren Gerät und der Fernmelde-, insbesondere Fernsprechanlage, wobei den verschiedenen Informationsblöcken unterschiedlicher Art im peripheren Gerät (PG) und/oder in der zentralen Steuerung (GE), in einem Speicher (SSP bzw. SP1, SOx) unterschiedliche Kennungen für die entsprechenden, unterschiedlichen Prioritätswertigkeiten zugeordnet sind.

Durch die DE-PS 2 043 992 ist bereits eine Schaltungsanordnung für Fernmeldeanlagen, insbesondere Fernsprechvermittlungsanlagen bekannt, in der zwischen einem zentralen Gerät einerseits und in ihrer Art unterschiedlichen, individuellen Geräten andererseits dementsprechend verschiedenartige Nachrichten austauschbar sind, wobei bei jedem Stecken eines als steckbare Einheit ausgebildeten individuellen Gerätes eine Kennzeichnung derart erfolgt, daß beim Abtasten des entsprechenden Einschubplatzes im Zuge eines bestimmten Programms der zentralen, programmgesteuerten Anlage in einem zentralen Zustandsspeicher die Belegung des Platzes durch ein Gerät mittels einer Gruppenkennzeichnung gekennzeichnet wird.

Auf diese Weise wird die Gruppenzugehörigkeit des Gerätes festgestellt, so daß über einen einzigen Anschluß unterschiedliche individuelle Geräte mit einem zentralen Gerät verbindbar sind.

Ferner ist durch die DE-PS 2 906 717 ein Verfahren zur Erfassung, Sicherung und Prüfung von Informations- und Steuerdaten, die in zentralgesteuerten Fernmeldevermittlungsanlagen zwischen peripheren Steuerwerken über ein zentrales Steuerwerk ausgetauscht werden bekannt, bei dem ein Daten- und Informationsüberwacher vorgesehen ist. Bei diesem Verfahren sollen die im zentralen Steuerwerk von den peripheren Steuerwerken eingehenden und die vom zentralen Steuerwerk an die peripheren Steuerwerke abgegebenen Daten und Informationen bei laufender Anlage, ohne störend in den Betrieb der Anlage einzugreifen, ermittelbar und aufzeichenbar sein. Zu diesem Zwecke wird von einem Daten- und Informationsüberwacher beim Eingehen von Daten- und Informationen bzw. bei der Ausgabe ein im zentralen Steuerwerk beigefügtes Merkmal erkannt, so daß diese Daten und Informationen in einem Zwischenspeicher einspeicherbar und bei Bedarf auslesbar sind.

Die Aufgabe der vorliegenden Erfindung besteht darin, in einer Fernmeldeanlage den Austausch von zu verschiedenen Informationsblöcken nach einem bestimmten System zusammengefaßten Informationen unterschiedlicher Art in einfacher Weise über einen einzigen Anschluß austauschbar und abrufbar nach vorgegebenen Prioritäten zu machen.

Dies wird dadurch erreicht, daß diese Prioritätswertigkeiten sowohl die zu übertragende Informationsart (beispielsweise Ausdrucken von Gebührenzetteln pro Gespräch, Gesamtgebührenübersichten, Prüfangaben, Ausdruck der vom Rufnummerngeber der Bedienungsperson übertragenen Kennzahlen, Wiedergabe der gespeicherten hexadezimalen Werte) und die betroffenen Speicherplätze im genannten Speicher und im peripheren Gerät, als auch die Reihenfolge des Austausches der Informationen unterschiedlicher Art zwischen der Fernmeldeanlage und dem peripheren Gerät bestimmen und daß der Austausch von Informationen und die sich daraus ergebende Verarbeitung durch eine an der Fernmeldeanlage angeschaltete Bedienungsperson durch Wahl bestimmter Kennungen unmittelbar bzaw. zeitlich- und/oder prioritätswertigkeitsbedingt über Steuerschaltmittel des peripheren Gerätes nach vorheriger Eingabe von entsprechenden Befahlsdaten steuerbar ist.

Auf diese Weise ist es möglich über ein einziges peripheres Gerät bzw. über eine geringe Anzahl von peripheren Geräten eine Vielzahl von Informationen unterschiedlicher Art nach Bedarf und in einer bestimmten Reihenfolge zusammengefäßt zu übertragen und besteht auch in einfacher Weise die Möglichkeit, daß die Bedienungsperson unmittelbar oder mittelbar den Austausch von Informationen steuert und dieser Austausch weiterhin in Abhängigkeit der vorgesehenen Prioritätswertigkeiten durchgeführt wird. Hierdurch ist sichergestellt, daß die Bedienungsperson nicht ungewollt einen bereits laufenden Informationsaustausch unterbricht. Zu diesem Zwecke sind in der zentralen Steuerung der Fernmeldeanlage Zwischenspeicher vorhanden, welche das Verlorengehen von in dem peripheren Gerät einzugebenden Daten verhindern.

Nachfolgend ist anhand der Zeichnungen ein Ausführungsbeispiel der Erfindung beschrieben. Es sind nur die für das Verständnis wichtigen Einzelheiten dargestellt.

Die Figur 1 zeigt eine Systemübersicht einer Fernmeldeanlage, insbesondere Fernsprechanlage, mit einer zentralen Steuerung, einem Datenspeicher, einem Programmspeicher und einem Arbeitsspeicher.

Die Figur 2 in einem Prinzipschaltbild die Anschaltung eines peripheren Gerätes und die in der Fernmeldeanlage und im peripheren Gerät vorgesehenen zusätzlichen Einrichtungen.

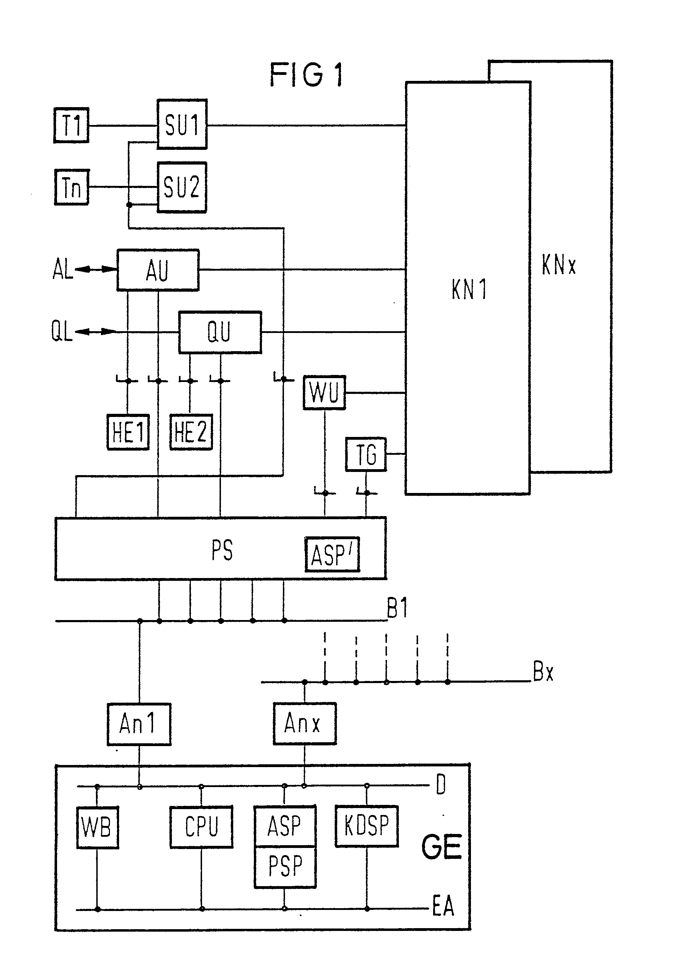

Bei der in der Fig. 1 gezeigten Systemübersicht einer Fernsprechanlage ist von der in der DE-AS 2 647 404 beschriebenen zentralgesteuerten Fernsprechnebenstellenanlage ausgegangen. Für die Verbindungsherstellung über das Sprechwegekoppelnetzwerk KN1, KNx ist eine zentrale Steuerung GE vorgesehen, welche zumindest eine Programmsteuerung CPU, einen Arbeitsspeicher ASP, und einen Kundendatenspeicher KDSP enthält, die über entsprechende Datenübertragungsleitungen D, IA zum Austausch von Informationen miteinander verbunden sind. Die Anschaltung der zentralen Steuerung GE an zu peripheren Einrichtungen führenden Datenübertragungsleitungen B1 erfolgt über, entsprechende Anschaltemittel, beispielsweise An1. Die peripheren Einrichtungen werden über eine periphere Steuerung PS angesteuert. Als periphere Einrichtungen sind beispielsweise Teilnehmerstellen T1, Tn mit entsprechenden Teilnehmerschaltungen SU1, SUn vorgesehen, die über das Sprechwegekoppelnetz KN1 miteinander und mit weiterhin vorhandenen Amtsleitungsübertragungen AU und Querverbindungsleitungsübertragungen QU verbindbar sind. An die Amtsleitungsübertragungen und Querverbindungsleitungsübertragungen sind beispielsweise Hörzeichenempfänger HE1, HE2 anschaltbar. Für die Aufnahme und Auswertung von Wahlkennzeichen sind Wahlspeichersätze WU und weiterhin ist für die Zeichengabe zu den peripheren Einrichtungen, d. h. zu den Teilnehmern bzw. Vermittlungsplätze und Übertragungen zumindest ein Tongenerator TG vorgesehen, der von der zentralen Steuerung GE steuerbar ist.

In einem der zentralen Steuereinrichtung GE weiterhin zugeordneten Programmspeicher PSP sind alle Programme für die in der Anlage durchzuführenden Leistungsmerkmale enthalten. Ein der zentralen Steuereinrichtung zugeordneter Wahlbewerter WB dient zur Bewertung der gewählten Kennziffern, die von dem Wahlspeichersatz WU über die periphere Steuerung PS und das Datenübertragungsleitungsbündel B1, sowie über den Anschaltesatz AN1 und das Datenübertragungsleitungsbündel D aufgenommen werden.

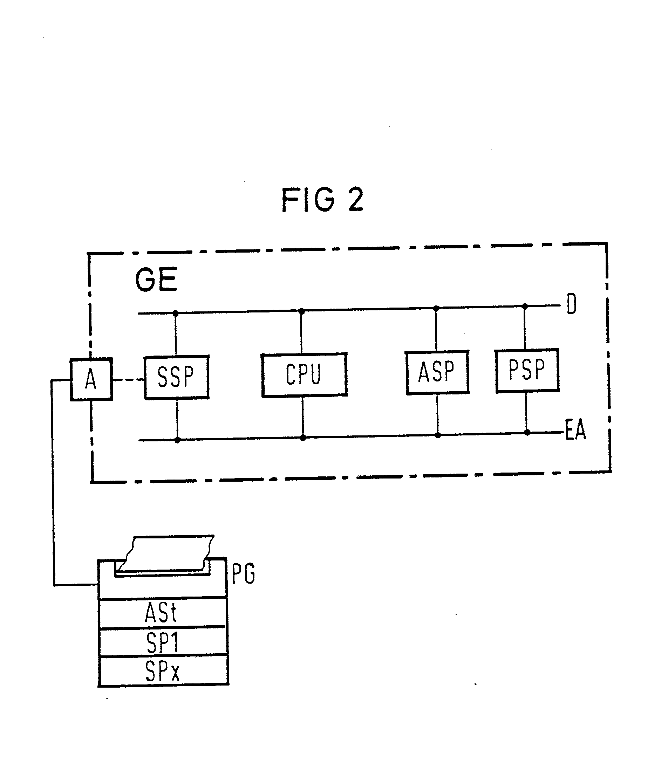

In Fig. 2 ist nochmals ein Teil der gemeinsamen Steuereinrichtung gezeigt, wobei der Arbeitsspeicher ASP und der Programmspeicher PSP getrennt an den Datenübertragungsleitungen D und EA angeschaltet sind. Zusätzlich ist noch ein besonderer Speicher SSP an den Datenübertragungsleitungen D und EA angeschaltet, an den das periphere Gerät anschaltbar ist. Dieser besondere Speicher SSP ist Bestandteil der gemeinsamen Steuereinrichtung und kann auch der Programmsteuerung CPU zugeordnet werden. Der Programmspeicher PSP und die Programmsteuerung CPU können auch zu einer Einheit zusammengefaßt sein. Das periphere Gerät ist als steckbare Einheit ausgebildet, wobei der zur gemeinsamen Steuereinrichtung GE führende Adapter A so ausgebildet ist, daß auch periphere Geräte anderer Art an die Anlage anschaltbar sind. Ist dies der Fall, so wird beim Abtasten des entsprechenden Adapters im Zuge eines bestimmten Programms der Programmsteuerung die Belegung des Adapters mittels einer entsprechenden Kennzeichnung bewertet und auf diese Weise werden dann auch die übertragenen Signale, ankommend bzw. abgehend, anders behandelt.

Es ist angenommen, daß verschiedene Informationsblöcke gebildet werden, die jeweils aus zusammengefaßten Informationen unterschiedlicher Art bestehen und die über den gezeigten, einzigen Anschluß A zwischen der gemeinsamen Steuereinrichtung einer Fernmelde-, insbesondere Fernsprechanlage, in beiden Richtungen ausgetauscht werden. Um einen einwandfreien Ablauf des Austausches zu gewährleisten, werden den Informationsblöcken, die, wie vorstehend erwähnt, Informationen unterschiedlicher Art enthalten, unterschiedliche Prioritäten zugeteilt. Zu diesem Zwecke sind in einem entsprechenden Speicher der zentralen Steuerung GE der Fernmeldeanlage, insbesondere Fernsprechanlage, unterschiedliche Kennungen für die entsprechenden, unterschiedlichen Prioritätswertigkeiten der verschiedenen Informationsblöcke zugeordnet. Diese Prioritätswertigkeiten bestimmen sowohl die zu übertragene Informationsart, d. h. also auch Informationsblöcke, und die betroffenen Speicherplätze im Speicher, beispielsweise SSP der Fernmeldeanlage und der Speicherplätze, z. B. SP1 oder SPx, in dem peripheren Gerät. Ebenfalls wird auch mit der Prioritätswertigkeit die Reihenfolge des Austausches der Informationen unterschiedlicher Art und somit auch der jeweils zu übertragende Informationsblock gekennzeichnet.

Der Austausch von Informationen und die sich daraus ergebende Verarbeitung durch eine an der Fernmeldeanlage angeschaltete Bedienungsperson ist durch Wahl bestimmter Kennungen unmittelbar bzw. zeitlich und/oder prioritätswertigkeitsbedingt über entsprechende Steuerschaltmittel ASt des peripheren Gerätes PG nach vorheriger Eingabe von entsprechenden Befehlsdaten steuerbar.

Ein solches peripheres Gerät kann als Beispiel folgende Informationsblöcke enthalten :

1. Gebührenangaben pro Gespräch und pro Teilnehmer, also die Daten, die auf ein Gesprächsticket wiederzugeben sind.

2. Gebühren pro Teilnehmeranschluß, die notwendig sind, um eine Gesamtübersicht über die Gebühren auszudrucken.

3. Informationen, die notwendig sind, um bei der Wahl durch die Bedienungsperson mittels eines Rufnummerngegebers, d. h. also bei der verkürzten Wahl die Kurzrufnummern in normale lange Kennzahlen umzusetzen und die Informationen, die notwendig sind, die Displayangaben des Bedienungsplatzes zu steuern.

4. Informationen, welche übereinstimmen mit dem Inhalt der in der gemeinsamen Steuereinrichtung vorhandenen veränderbaren und nichtveränderbaren Datenspeicher. Auf diese Weise ist der Speicherinhalt dieser Datenspeicher ausdruckbar und auch über das periphere Gerät mittels Wahl veränderbar.

5. Informationen, die notwendig sind, um bestimmte, durch Wahl der Bedienungsperson wählbare Tests bestimmter Teile der Anlage und auch Routineprüfungen durchführen zu können. Die Steuerung des peripheren Gerätes ist so ausgerichtet, daß gleichzeitig mit der Übergabe von Informationen zur Fernmeldeanlage bzw. auch bei der Übernahme von Informationen aus der Fernmeldeanlage die übertragenen Informationen von einem integrierten Drucker bzw. von einem Datensichtgerät dargestellt werden.

Anstelle des in Fig. 2 dargestellten peripheren Gerätes kann auch ein anderes peripheres Gerät über den gleichen Anschluß an die Anlage angeschlossen werden. Ein solches anderes peripheres Gerät ist beispielsweise eine Floppy-Disk, ein Speicher, der dazu dienen kann, Veränderungsdaten zur Anlage zu übertragen. Welches periphere Gerät mit der Anlage verbunden ist, wird durch eine entsprechende Abfrage der gemeinsamen Steuerung und Erkennung einer entsprechenden Kennung bzw. Adresse abgefragt und sichergestellt.

**Patentanspruch**

Verfahren zum Austausch von zu verschiedenen Informationsblöcken nach einem bestimmten System zusammengefaßten Informationen unterschiedlicher Art zwischen zumindest einem an einer Fernmelde-, insbesondere Fernsprechanlage, über einen einzigen Anschluß anschaltbaren, peripheren Gerät und der Fernmelde-, insbesondere Fernsprechanlage, wobei den verschiedenen Informationsblöcken unterschiedlicher Art im peripheren Gerät (PG) und/oder in der zentralen Steuerung (GE), in einem Speicher (SSP bzw. SP1, SOx) unterschiedliche Kennungen für die entsprechenden, unterschiedlichen Prioritätswertigkeiten zugeordnet, sind, dadurch gekennzeichnet, daß diese Prioritätswertigkeiten sowohl die zu übertragende Informationsart (beispielsweise Ausdrucken von Gebührenzetteln pro Gespräch, Gesamtgebührenübersichten, Prüfangaben, Ausdruck der vom Rufnummerngeber der Bedienungsperson übertragenen Kennzahlen, Wiedergabe der gespeicherten hexadezimalen Werte) und die betroffenen Speicherplätze im genannten Speicher (SSP bzw. SP1, SPX) und im peripheren Gerät (PG), als auch die Reihenfolge des Austausches der Informationen unterschiedlicher Art zwischen der Fernmeldeanlage und dem peripheren Gerät (PG) bestimmen und daß der Austausch von Informationen und die sich daraus ergebende Verarbeitung durch eine an der Fernmeldeanlage angeschaltete Bedienungsperson durch Wahl bestimmter Kennungen unmittelbar bzw. zeitlich- und/oder prioritätswertigkeitsbedingt über Steuerschaltmittel (ASt) des peripheren Gerätes (PG) nach vorheriger Eingabe von entsprechenden Befehlsdaten steuerbar ist.

**Claim**

Method for the exchange of various types of information, which is combined into various information.blocks in accordance with a specified system, between at least one peripheral device which can be connected to a telecommunications exchange, in particular a telephone exchange, by means of a single terminal, and the telecommunications in particular telephone exchange, wherein the various information blocks in the peripheral device (PG) and/or in the central control unit (GE) are assigned different identifications for the corresponding, different priority values in a store (SSP and SP1, SOx), characterised in that these priority values determine both the type of information which is to be transmitted (for example, printing of charge bills per call, overall charge tables, test data, printing of the code numbers transmitted by the call number generator of the operator, representation of the stored hexadecimal values) and the storage places concerned in said store (SSP and SP1, SPX) and in the peripheral device (PG), and also the sequence of the exchange of the various types of information between the telecommunications exchange and the peripheral device (PG), and that the exchange information and the resulting processing can be controlled by an operator, who is connected to the telecommunications exchange by dialling specific identifications directly or in dependence upon time and/or priority value by means of control switching means (ASt) of the peripheral device (PG) after the previous input of corresponding instruction data.

**Revendication**

Procédé pour l'échange d'informations de nature différente, réunies selon un système déterminé en différents blocs d'informations, entre au moins un appareil périphérique susceptible d'être branché par un raccordement unique à une installation de télécommunications, en particulier une installation téléphonique, et cette installation, dans lequel, dans une mémoire (SSP respectivement SP1, SOx), différentes identifications caractéristiques pour les divers degrés de priorité correspondants sont coordonnées aux différents blocs d'informations de nature différente dans l'appareil périphérique (PG) et/ou dans la commande centrale (GE), caractérisé en ce que ces degrés de priorité déterminent à la fois la nature des informations à transmettre (par exemple l'impression de fiches de taxes par conversation, tables générales de taxation, indications de contrôle, impression des numéros transmis par l'émetteur de numéros d'appel de l'opérateur, reproduction des valeurs hexadécimales mémorisées), plus les positions de mémoire concernées dans ladite mémoire (SSP respectivement SP1, SPX) et dans l'appareil périphérique (PG), et l'ordre de succession de l'échange des informations de nature différente entre l'installation de télécommunication et l'appareil périphérique (PG), et que l'échange d'informations et le traitement qui en découle par un opérateur raccordé à l'installation de télécommunications peuvent être commandés, directement, respectivement en fonction du temps et/ou du degré de priorité, par la sélection d'identifications caractéristiques déterminées, à travers des moyens de commutation commandés (ASt) de l'appareil périphérique (PG) et après introduction de données d'instructions adéquates.

# FIG 1

# FIG 2